# EUROPEAN PATENT APPLICATION

(11) **EP 4 436 236 A1**
(43) Date of publication of application: **25.09.2024**
(21) Application number: 22909400.8
(22) Date of filing: 15.09.2022
(51) Int. Cl.: H04W 16/20

(54) **DATA TRANSMISSION METHOD AND APPARATUS, ELECTRONIC DEVICE, AND STORAGE MEDIUM**

(30) Priority: 24.12.2021 CN 202111602089
(71) Applicant: ZTE Corporation, Shenzhen, Guangdong 518057 (CN)
(72) Inventor: SONG, Xin, Shenzhen, Guangdong 518057 (CN)
(74) Representative: Osterhoff, Utz
(86) International application number: PCT/CN2022/119092
(87) International publication number: WO 2023/116082

(57) **Abstract**

Embodiments of the present application relate to the field of communication transmission, and in particular to a data transmission method, apparatus, electronic device and storage medium. The method is applied to a primary router of a tri-band router, and the primary router includes a first channel, a second channel and a third channel. The method includes: when it is detected that both the user equipment and the secondary router access the third channel, allocating a time slice with a number not less than a first threshold to the user equipment, and allocating a time slice with a number not less than a second threshold to the secondary router; and performing data transmission with the user equipment and the secondary router through the third channel according to the time slices respectively allocated to the user equipment and the secondary router. The present application can make full use of the wireless resources of the tri-band router and bring out the maximum capabilities of the tri-band router.

## Description

### TECHNICAL FIELD

Embodiments of the present application relate to the field of communication transmission, and in particular to a data transmission method, apparatus, electronic device and storage medium.

### BACKGROUND

With the development of WiFi technology and the growth of business, in order to provide users with a better experience, tri-band WiFi routers have begun to enter the wireless router market. Tri-band WiFi routers refer to the first 5G channel and 2.4G channel used by ordinary services. That is, the first channel and the second channel are used by ordinary services. Services such as games that have higher requirements on network delay use the second dedicated 5G channel, which is the third channel that has higher requirements on network delay. However, the current products only simply use the second 5G frequency band (the third channel), or meet the requirements of high-speed services, such as gaming services, or meet the wireless networking requirements between WiFi routers when secondary and mother routers are networked, in order to achieve greater wireless coverage.

That is, after using a tri-band WiFi router for the secondary-primary router networking, it can only meet the demand for greater wireless coverage. Since the third channel is used for secondary-primary router networking, the user can only feel the presence of a dual-band WiFi router within the coverage area of the primary router (main router), and cannot use the maximum capabilities of the tri-band router.

### SUMMARY

An embodiment of the present application provides a data transmission method, apparatus, electronic device, and storage medium that can fully utilize the wireless resources of the tri-band router and maximize the capabilities of the tri-band router.

The embodiment of the present application provides a data transmission apparatus, including: an allocation unit, configured to allocate, in response to detecting that both a user equipment and a secondary router access a third channel, a time slice with a number not less than a first threshold to the user equipment and a time slice with a number not less than a second threshold to the secondary router; and an execution unit, configured to perform data transmission with the user equipment and the secondary router through the third channel according to the time slices respectively allocated to the user equipment and the secondary router.

The embodiment of the present application also provides an electronic device, including: at least one processor; and a memory communicated with the at least one processor. An instruction executable by the at least one processor is stored in the memory and is executed by the at least one processor to enable the at least one processor to perform the data transmission method as described above.

The embodiment of the present application also provides a computer-readable storage medium on which a computer program is stored, when the computer program is executed by a processor, the data transmission method as described above is implemented.

In this embodiment of the present application, time slices are allocated to the user equipment of the primary router and the secondary router according to their access status to the third channel, and their services are executed in their corresponding time slices. For example, in the time slice allocated to the user equipment of the primary router, the user equipment of the primary router is allowed to transmit data through the third channel and execute the corresponding services of the primary router. In the time slice allocated to the secondary router, the secondary router is allowed to transmit data through the third channel and execute the corresponding services of the secondary router. When the time slices are alternately executed according to the preset execution rules, the tasks of both the user equipment of the primary router and the secondary router can be executed simultaneously at the user perception level. The wireless resources of tri-band WiFi is fully utilized to maximize system capacity (number of user accesses and user bandwidth).

### BRIEF DESCRIPTION OF THE DRAWINGS

FIG. 1 is a flow chart of a data transmission method according to an embodiment of the present application.
FIG. 2 is a schematic diagram of a data transmission method according to an embodiment of the present application.
FIG. 3 is a flow chart of a data transmission method according to another embodiment of the present application.
FIG. 4 is a schematic diagram of a data transmission apparatus according to an embodiment of the present application.
FIG. 5 is a schematic diagram of an electronic device according to an embodiment of the present application.

### DETAILED DESCRIPTION OF THE EMBODIMENTS

In order to make the purpose, technical solutions and advantages of embodiments of the present application clearer, the embodiments of the present application will be described in detail below in conjunction with the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the embodiments of the present application. The various embodiments can be combined with each other and quoted from each other on the premise that there is no contradiction.

The terms "first" and "second" in the embodiments of the present application are only used for descriptive purposes and cannot be understood as indicating or implying relative importance or implicitly indicating the number of indicated technical features. Therefore, features defined as "first" and "second" can explicitly or implicitly include at least one of these features. In the description of the embodiments of the present application, the terms "include" and "have" and any variations thereof are intended to cover non-exclusive inclusion. For example, a system, product or device that includes a series of components or units is not limited to the listed components or units, but optionally also includes components or units that are not listed, or optionally also includes other components or units inherent to these products or devices. In the description of the embodiments of the present application, "a plurality of" means at least two, such as two, three, etc., unless otherwise clearly and specifically limited.

Traditional WiFi routers include the 2.4G frequency band and the 5G frequency band for WiFi wireless communication. The two frequency bands complement each other, and the dual-band meets the wireless communication needs of users' homes. As high-definition TV and game users have higher requirements for wireless bandwidth and network latency, tri-band WiFi routers have emerged.

Ordinary services use the first 5G channel and 2.4G channel. Services such as games that have higher requirements for network latency use the second dedicated 5G channel. In addition, in order to meet the needs of whole-house coverage for large families, secondary-mother router products have emerged. The secondary router serves as a WiFi extension of the mother router, making WiFi coverage wider. In order not to affect the network bandwidth of original users, routers with a tri-band WiFi structure can also meet the requirements for connecting the secondary and mother routes through a dedicated return channel. With the widespread demand from users for services that have higher requirement for network latency, such as games and high-definition TV, as well as the requirement for whole-house coverage, the secondary and mother routes of the tri-band WiFi will be the best solution.

For the primary and secondary routes of the tri-band WiFi, after the current primary and secondary routes of the tri-band WiFi complete the networking, they form a fixed mode WiFi coverage model. This coverage model exclusively occupies the second 5G channel, that is, the second 5G channel is used as a dedicated backhaul channel for the primary and secondary routers. If users are completely concentrated in the coverage area of the primary router, the dedicated backhaul channel resources between the primary router and the secondary router will be wasted or idle due to the fixed networking model; that is, at this time, the user can only experience an ordinary dual-band WiFi router product (because the second 5G channel is used as a dedicated backhaul channel for the secondary router and the primary router), resulting in the primary router of the tri-band WiFi being unable to exert its maximum capabilities.

The current design of tri-band routers simply adds a second 5G frequency band to the original dual-band router, and adds a game hotspot page on the UI interface to implement parameter settings for the new 5G frequency band, such as service set identifier (SSID) name, encryption authentication, access password and other parameters. After using this game hotspot, the wireless networking function of multiple routers cannot be realized, that is, the backhaul service of the secondary router will not be possible. After the user selects the wireless networking function and successfully establishes the network, this gaming hotspot will disappear, that is, the second 5G frequency band will be used as a dedicated backhaul channel. Even if users are concentrated in the parent routing area for data services, due to the networking mode, the 5G frequency band resources of the second channel will be free to provide services for possible sub-routing users. If the user wants to use a dedicated gaming hotspot, he must disconnect the network of the primary and secondary routers and switch to the dedicated hotspot mode, which is extremely inconvenient to use.

In addition, the performance of the central processing unit (CPU) of home wireless routers is getting stronger and stronger, and WiFi standards continue to evolve. WiFi 6E already supports the 6GHz WiFi band, and WiFi chips are highly integrated. Tri-band WiFi routers will become more and more popular, and even quad-band WiFi routers will appear. How to make multi-band WiFi play its best role is a practical problem that needs to be solved.

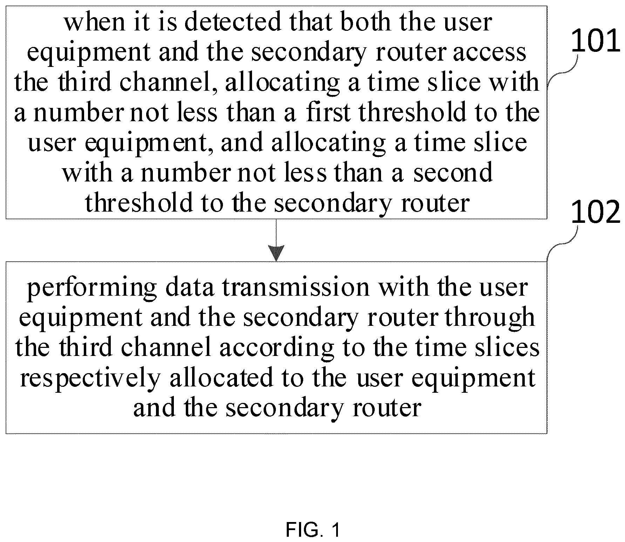

An embodiment of the present application relates to a data transmission method applied to a primary router of a tri-band router, and the primary router includes a first channel, a second channel and a third channel. The specific process is shown in FIG. 1. The embodiments of the present application are applied to primary and secondary routing products, including the primary router central access point (CAP) and the secondary router range extend (RE). The primary router in the application environment of the present application forwards the existing Ethernet network interface through WiFi wirelessly. Based on the original 2.4G frequency band (first channel) and the first 5G frequency band (second channel), the primary router can support the second 5G frequency band (three channel) and be accessed as a dedicated user. At the same time, a wider range of WiFi wireless coverage can be achieved through the secondary router.
Step 101, when it is detected that both the user equipment and the secondary router access the third channel, allocating a time slice with a number not less than a first threshold to the user equipment, and allocating a time slice with a number not less than a second threshold to the secondary router; and
Step 102, performing data transmission with the user equipment and the secondary router through the third channel according to the time slices respectively allocated to the user equipment and the secondary router.

In this embodiment, according to the status in which the user equipment and secondary router of the primary router access the third channel, time slices are allocated to them, and their services are executed in their corresponding time slices, including: in the time slice allocated to the user equipment of the primary router, the user equipment of the primary router is allowed to transmit data through the third channel and execute the corresponding services of the primary router; in the time slice allocated to the secondary router, the secondary router is allowed to transmit data through the third channel and execute corresponding services of the secondary router. The wireless resources of tri-band WiFi are fully utilized and the third channel data transmission of the primary router according to the access and load conditions of the primary and secondary router is dynamically adjusted, so that hardware wireless resources can be fully utilized in various scenarios to maximize system capacity (number of user accesses and user bandwidth).

The implementation details of the data transmission method of this embodiment are described in detail below. The following content is only provided for the convenience of understanding and is not necessary for implementation of this solution.

In step 101, when it is detected that the user equipment and the secondary router access the third channel, a time slice with a number not less than the first threshold is allocated to the user equipment, and a time slice with a number not less than the second threshold is allocated to the secondary router. The "access" refers to requesting data or generating data interaction and information transmission. That is, when both the secondary router and the user equipment interact with the primary router through the third channel, time division multiplexing is used to enable both the secondary router and the user equipment to transmit information through the third channel.

In an example, the method further includes: the third channel has a first port for user equipment to access; and the third channel has a second port for the secondary router to access. That is, one physical hotspot is transformed into two virtual logical hotspots through time division, which are the first port of the third channel and the second port of the third channel and are used to receive access from the user equipment of the primary router and data backhaul of the secondary router respectively, to simultaneously meet the proprietary services of the primary router and the wireless networking needs of the primary and secondary routers.

In addition, different gears can be set for the time-sharing working hours of the two virtual hotspots, such as prioritizing user equipment of the primary router, prioritizing the secondary router, or equal parts. Different gears can meet different scenarios, such as prioritizing dedicated high-demand services for users of the primary router, prioritizing backhaul services for users of the secondary router, and taking into account both dedicated high-demand services for user equipment of the primary router and backhaul services for the secondary router. The backhaul service of the secondary router refers to the networking requirements between the secondary router and the primary router. Priority is given to the user-specific high-demand services of the primary router, such as allocating more or all time slices to user equipment of the primary router accessing the third channel. Priority is given to the backhaul services of users of the secondary router, such as allocating more or all time slices to the secondary router. Taking into account the dedicated high-demand services of the user equipment of the primary router and the backhaul services of the secondary router, for example, allocating the same number of time slices to both to conduct both services at the same time, or based on the trained dynamic adjustment model, when both are connected to the third channel, different proportions of the number of time slices are allocated to the two based on the detected data request conditions (such as required bandwidth, etc.) of the user equipment of the primary router and the secondary router.

In an example, the first threshold is equal to the second threshold. Allocating the time slices with the number not less than the first threshold to the user equipment, and allocating the time slices with the number not less than the second threshold to the secondary router, includes: allocating an equal number of time slices to the use device and secondary router. That is, after the user equipment of the primary router and the secondary router access the third channel of the primary router, the same number of time slices can be allocated to them, that is, the working time of the third channel of the primary router is equally divided. Due to the short duration of each time slice, when the time slices allocated to the two are alternately executed according to a preset rule, the need to support the simultaneous access of the services of the user equipment of the primary router and the services of the secondary router can be realized at the user perception level, maximizing the product advantages of the primary and secondary routers in the tri-band router. In this case, the first threshold and the second threshold can be set equal, the time slice with the number equal to the first threshold is allocated to the users of the primary router, and the time slice with the number equal to the second threshold is allocated to the secondary router.

In an example, the method further includes: when it is detected that the user equipment accesses the third channel and the secondary router does not access the third channel, allocating the time slice with the number not less than a third threshold to the user equipment; the third threshold is greater than the first threshold. That is, when it is detected that only the user equipment of the primary router accesses the third channel, more time slices are allocated to the user equipment, for example, 80% or more of the time slices in the service time period are allocated to the users of the primary router, which fully meets the data needs of the user equipment of the primary router. At the same time, a smaller number of time slices can be allocated to secondary router to detect whether there are access requirements on the secondary router.

In an example, the method further includes: when it is detected that the user equipment does not access the third channel and the secondary router accesses the third channel, allocating the time slice with the number not less than a fourth threshold to the secondary router; the fourth threshold is greater than the second threshold. That is, when it is detected that only the user equipment of the secondary router accesses the third channel, more time slices are allocated to the secondary router, for example, 80% or more of the time slices in the service time period are allocated to the secondary router, which fully meets the data requirements of the secondary router. At the same time, a smaller number of time slices can be allocated to the user equipment of the primary router to detect whether the user equipment of the primary router has access requirements.

In an example, the method further includes: adjusting the allocation of time slices when the user equipment or secondary router disconnects data transmission from the primary router. That is, if it is detected that the user equipment of the primary router or the secondary router exits the connection when both the user equipment of the primary router and the secondary router access the third channel, the time slice allocated to them can be dynamically adjusted. More time slices are allocated to the party that is still transmitting data through the third channel, including the user equipment of the primary router or the secondary router. Specifically, for example, when the user equipment of the primary router and the secondary router access the third channel, time slices are allocated according to the first threshold and the second threshold. When the user equipment of the primary router exits data transmission on the third channel, allocation of the time slice is adjusted. The time slice is allocated to the secondary router according to the fourth threshold and the number of time slices allocated to the secondary router is increased; or allocation of the time slice is adjusted when the secondary router exits data transmission on the third channel. The time slice is allocated to the user equipment of the primary router according to the third threshold, and the number of time slices allocated to the user equipment of the primary router is increased.

In addition, if one of the user equipment of the primary router and the secondary router independently accesses the third channel, and after running for a period of time, it is detected that the other accesses the third channel, dynamic adjustment of allocation of time slice is also supported. For example, when the user equipment of the primary router accessing the third channel is allocated the time slice according to the third threshold, and after running for a period of time, the secondary router also needs to access the third channel, the time slice allocated to the user equipment of the primary router is readjusted according to the first threshold. When the time slice is allocated to the secondary router accessing the third channel according to the fourth threshold, and after running for a period of time, the user equipment of the primary router also needs to access the third channel, the time slice allocated to the secondary router is readjusted according to the second threshold. This enables the third channel to always maximize system capacity (number of user accesses and user bandwidth).

In step 102, data transmission is performed with the user equipment and the secondary router through the third channel according to the time slices allocated to the user equipment and the secondary router respectively. That is, after allocating the time slice to the device accessing the third channel, the corresponding service is executed according to the allocated time slice. For example, executing the corresponding service alternately within the time slice allocated for the two according to the preset rules includes: executing services corresponding to the user equipment of the primary router in the time slice allocated to the user equipment of the primary router, executing services corresponding to the secondary router in the time slice allocated to the secondary router, etc.. From the user's perception level, the requirement to support the simultaneous access of services of the user equipment of the primary router and services of the secondary router can be realized, maximizing the product advantages of the primary and secondary routers in the tri-band router.

In an embodiment, when it is detected that neither the user nor the secondary router accesses the third channel, the same number of time slices is pre-allocated to the user equipment and the secondary router. That is, when neither the user equipment of the primary router nor the secondary router transmits data through the third channel, the time slice is divided equally to wait for the two to access. If an equal number of time slices is allocated to both, there is no need to adjust the time slice when the user equipment of the primary router and the secondary router both access. The time slice can be allocated according to the original equal number of states. At the same time, if the user equipment of the primary router or the secondary router access separately, since the number of time slices is always divided equally, it can be quickly adjusted to meet the needs of any individual access, for example: allocate 10% of the time slice to the user equipment during random allocation, and allocate 90% of the time slice to the secondary router. However, if the user equipment actually accesses alone, the time slice allocated to the user equipment needs to be adjusted based on 10%. The time required for adjustment is longer than the time required for upward adjustment based on 50%. In other words, this implementation method can not only meet the needs of providing 5G WiFi coverage of proprietary services (such as game services) to the user equipment of the primary router and providing the backhaul channel to the secondary router, but can also reduce the adjustment time of the number of time slices to ensure the adjustment efficiency when the device accesses, thereby improving the user experience.

The following takes an actual implementation process as an example for detailed description. It can be understood that the following content is only for the convenience of understanding the technical details of an implementation manner, and is not necessary for this implementation solution.

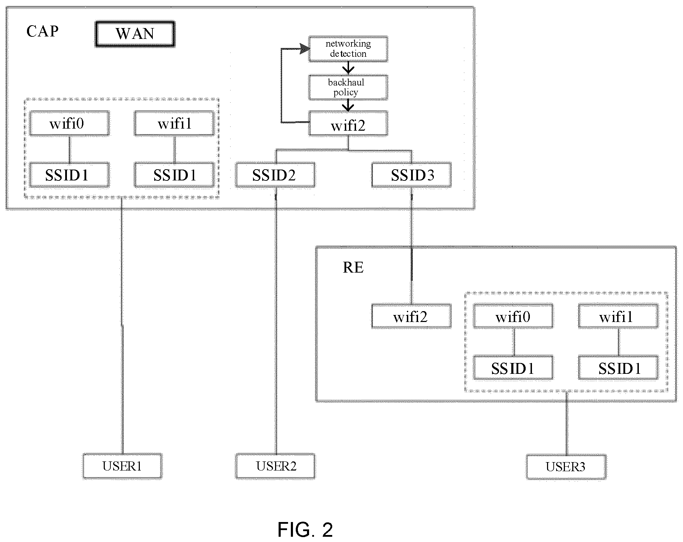

As shown in FIG. 2, which is a schematic diagram of this embodiment. A wide area network (WAN) module is configured to access the wide area network. wifi0 and wifi1 in the CAP device correspond to the 2.4G frequency band (first channel) and the first 5G frequency band (second channel) respectively, wifi2 is the second 5G frequency band (three channel); SSID, SSID1 in the CAP device is an identifier of a common service for user equipment of the primary router to access, SSID2 in the CAP device is the identifier of the service that has high latency requirements for the user equipment of the primary router to access, and SSID3 in the CAP device is the identifier that performs backhaul services for the secondary router to access. That is, SSID2 and SSID3 serve as two virtual hotspots of wifi2, that is, the first port and the second port of the third channel. A station (STA) in the RE device, that is, a user equipment accessing the wireless network that can be connected to the Internet, can be a device equipped with a wireless network card or a smart device with a WiFi module, or can be mobile or fixed. SSID1 in the RE device is the identifier of the service for users of the secondary router to access. In addition, USER1, USER2, USER3, etc. in the figure represent different types of access user equipment, and the number of access user equipment is not limited to one.

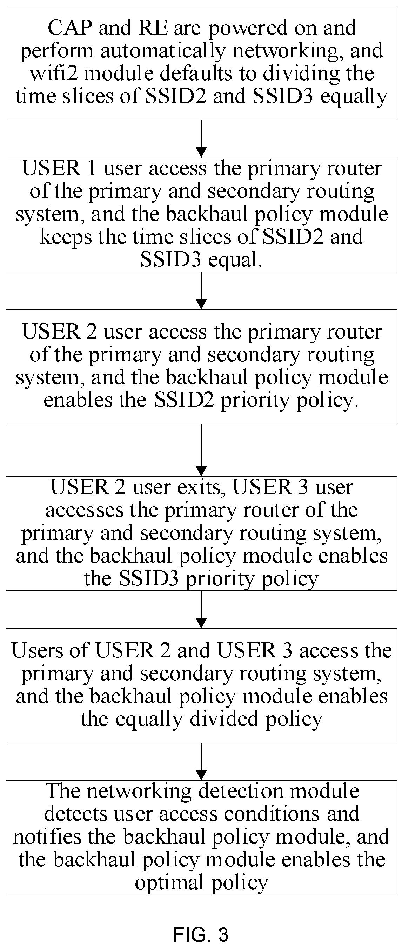

Referring to the structure shown in FIG. 2, the execution steps of this solution can refer to FIG. 3, for example:
Step 1, after the CAP and RE devices are powered on, performing automatically networking of WiFi mesh. After the CAP is powered on, the SSID2 and SSID3 hotspot times are equally divided by default. The RE device automatically connects to the SSID3 hotspot of the CAP device in STA mode through the parameters set in advance.
Step 2, a traditional user USER1 connects to the SSID1 hotspot of the CAP device. A networking detection module detects USER1 and reports user information to a backhaul policy module. The backhaul policy module finds that no USER2 and USER3 users are currently connected, and still maintains the current equally divided time parameters. The traditional user is user equipment that need to perform general services, and the dedicated user is user equipment that need to perform services that have high latency requirements. That is, the backhaul policy module stores a policy corresponding to the current network access status, or a trained model used to determine a processing solution based on the current network access status. The network access status includes whether users such as USER1, USER2 and USER3 are connected, as well as the required bandwidth parameters or other user data.
Step 3, the dedicated user USER2 is connected to the SSID2 hotspot of the CAP device. The networking detection module detects USER2 and reports the user information to the backhaul policy module. The backhaul policy module finds that there is no USER3 user access and the dedicated user USER2 is connected to the system. In order to ensure the best user experience for USER2 users, the wifi2 module is controlled to execute new time parameters and priority is given to the working hours of the SSID2 hotspot, for example, the user equipment is allocated the time slice with the number not less than the third threshold.
Step 4, the dedicated user USER2 exits. User USER3 of the secondary router is connected to the SSID1 hotspot of the RE device. The networking detection module detects the access information of USER2 and USER3 and reports the user information to the backhaul policy module. The backhaul policy module finds that is no user USER2 access and user USER3 of the secondary router is accessed to the system. In order to ensure the best user experience for USER3 user, the wifi2 module is controlled to execute new time parameters and priority is given to the working hours of SSID3 hotspot, for example, updating the allocation of time slices, and the secondary router is allocated the time slice with the number not less than the fourth threshold. User USER3 of the secondary router is connected to the SSID1 hotspot of the RE device, which means that the secondary router needs to access the primary router through the third channel to achieve data transmission with the primary router.
Step 5, the dedicated user USER2 is connected to the SSID2 hotspot of the CAP device. The networking detection module detects the access information of USER2 and USER3 and reports the user information to the backhaul policy module. The backhaul policy module finds that the current dedicated user USER2 and user USER3 of the secondary router are connected to the system at the same time. In order to balance the entire system, the wifi2 module is controlled to execute new time parameters, such as equally dividing the working hours of SSID2 and SSID3 hotspots; for example, according to the first threshold and the second threshold, respectively allocating time slices to user USER2 and the secondary router when the primary router accesses the third channel.
Step 6, querying dynamic changes of the dedicated user USER2 and the user USER3 of the secondary router, when performing data transmission through the third channel according to the allocated time slice. The networking detection module detects the access information of USER2 and USER3, and reports the user information to the backhaul policy module. The backhaul policy module controls the wifi2 module to execute the corresponding time parameters according to the premade rules to achieve the purpose of dynamically adjusting the optimal state of the system.

That is, in an embodiment of the present application, the CAP device includes a WAN module, wifi0 and wifi1 modules, which are traditional modules of dual-band routers. wifi0 corresponds to the SSID1 of the 2.4GHz frequency band, and wifi1 corresponds to the SSID1 of the first 5GHz frequency band. The traditional user USER1 accesses SSID1 and accesses Internet services through the WAN module. The CAP device also includes the networking detection module, the backhaul policy module and the wifi2 module. The wifi2 module provides the second 5GHz frequency band channel, which can virtualize two hotspots, SSID2 and SSID3, through the time division mechanism. The wifi2 module has different time division gears. The time slice of SSID2 and SSID3 can be adjusted by adjusting the time parameters of SSID2 and SSID3, to adjust the ratio of network bandwidth between SSID2 and SSID3. The dedicated user USER2 accesses the CAP device through the hotspot SSID2 and enjoys a dedicated data path, avoiding bandwidth competition with the traditional user USER1, thereby achieving a better user experience. The RE device is connected to the CAP device through the hotspot SSID3. Without affecting the original traditional user USER1, RE adds a wider range of WiFi coverage. The networking detection module is configured to manage and monitor user access in the primary and secondary routing systems, and can learn in real time the users currently accessing the system and the network where the users are located (for example, user type, traditional user USER1, dedicated user USER2, secondary route user USER3, and the number of users). The backhaul policy module is configured to control the wifi2 module to use different time parameters by monitoring user access information, thereby controlling the ratio of network bandwidth between SSID2 and SSID3.

The RE device includes wifi0, wifi1 and wifi2 modules. wifi0 corresponds to the SSID1 of the 2.4GHz frequency band, wifi1 corresponds to the SSID1 of the first 5GHz frequency band, and the wifi2 module corresponds to the second 5GHz frequency band. The SSID3 hotspot connected to the CAP device through STA mode form a dedicated backhaul channel for the secondary router and the main router. In this way, the user USER3 of the secondary router accesses the SSID1 hotspot of the RE device and accesses the CAP device through the above-mentioned dedicated backhaul channel, and further accesses Internet services through the WAN module.

The embodiment of the present application includes converting the second 5G frequency band (third channel) of the primary router from one physical hotspot into two virtual logical hotspots (the first port and the second port) through time-sharing broadcast, respectively, which are used for proprietary services with high latency requirements in the primary router and for backhaul services of the secondary router in the primary and secondary routers, in order to meet the needs of proprietary services and wireless networking at the same time. Secondly, different gears can be set for the time-sharing working hours of the two virtual hotspots, such as prioritizing the user equipment hotspot of the primary router, prioritizing the backhaul hotspot, and equally divided hotspots. Different gears can meet different scenarios, such as prioritizing the user equipment of the primary router, prioritizing the backhaul service of the secondary router, and the user equipment service of the primary router and the backhaul service of the secondary router are considered at the same time. Finally, by monitoring the access and load of the primary and secondary routing systems, the time-sharing working gears of the two virtual hotspots are dynamically adjusted to achieve the optimal configuration of system capacity. Considering the full use of the second 5G frequency band of the tri-band router, through real-time monitoring of the access and load conditions of the primary and secondary routing systems, the backhaul channels between the primary and secondary routing systems are intelligently and dynamically adjusted. Under the premise of ensuring the normal operation of the wireless networking system, the network bandwidth and low-latency business needs of access users can be met to the greatest extent. The maximum capacity of the entire system can be dynamically adjusted according to user access conditions, so that wireless resources can be fully utilized.

The steps of the various methods above are only for the purpose of clear description. During implementation, they can be combined into one step or some steps can be divided into multiple steps. As long as the same logical relationship is included, they are all within the scope of protection of this patent. Adding insignificant modifications or introducing insignificant designs to the algorithm or process, but not changing the core design of the algorithm and process, are within the scope of protection of this patent.

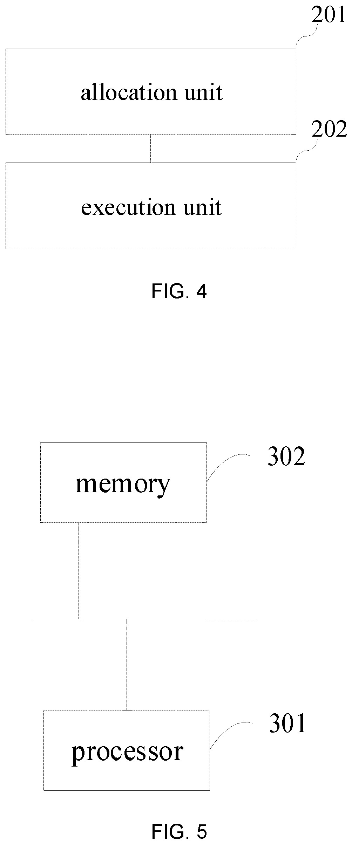

An embodiment of the present application relates to a data transmission apparatus. As shown in FIG. 4, the data transmission apparatus includes an allocation unit 201 and an execution unit 202.

The allocation unit 201 is configured to, when it is detected that both the user equipment and the secondary router access the third channel, allocate the time slice with the number not less than the first threshold to the user equipment, and allocate the time slice with the number not less than the second threshold to the secondary router.

The execution unit 202 is configured to perform data transmission with the user equipment and the secondary router through the third channel according to the time slices allocated to the user equipment and the secondary router respectively.

For the allocation unit 201, in an example, when it is detected that the user equipment accesses the third channel and the secondary router does not access the third channel, the user equipment is allocated the time slice with the number not less than the third threshold; the third threshold is greater than the first threshold.

In an example, when it is detected that the user equipment does not access the third channel and the secondary router accesses the third channel, the secondary router is allocated the time slice with the number not less than a fourth threshold; the fourth threshold is greater than the second threshold.

In an example, after allocating the time slice with the number not less than the first threshold to the user equipment and allocating the time slice with the number not less than the second threshold to the secondary router, the method further includes: when the user equipment or the secondary router disconnects data transmission from the primary router, adjusting the allocation of the time slice.

In an example, the method further includes: the third channel has a first port for the user equipment to access and has a second port for the secondary router to access.

In an example, the first threshold is equal to the second threshold. Allocating the user equipment the time slice with the number not less than the first threshold and allocating the secondary router the time slice with the number not less than the second threshold includes: allocating an equal number of time slices to the user equipment and the secondary router.

In addition, the method further includes: when it is detected that neither the user equipment nor the secondary router accesses the third channel, pre-allocating the same number of time slices to the user equipment and the secondary router.

In the embodiments of the present application, the time-sharing working gear of the third channel is dynamically adjusted by monitoring the access and load of the primary and secondary routing systems to achieve the optimal configuration of system capacity. Considering the full use of the second 5G frequency band (third channel) of the tri-band router, through real-time monitoring of the access and load conditions of the primary and secondary routing systems, the backhaul channel between the primary and secondary routing systems is intelligently and dynamically adjusted. Under the premise of ensuring the normal operation of the wireless networking system, the network bandwidth and low-latency business needs of access users can be met to the greatest extent. The maximum capacity of the entire system can be dynamically adjusted according to user access conditions, so that wireless resources can be fully utilized.

It is not difficult to find that this embodiment is a system embodiment corresponding to the above-mentioned embodiment, and this embodiment can be implemented in cooperation with the above-mentioned embodiment. The relevant technical details mentioned in the above embodiments are still valid in this embodiment, and will not be described again in order to reduce duplication. Correspondingly, the relevant technical details mentioned in this embodiment can also be applied to the above-mentioned embodiments.

It is worth mentioning that each module involved in this embodiment is a logical module. In practical applications, a logical unit can be a physical unit, or a part of a physical unit, or implemented in the combination form of multiple physical units. In addition, in order to highlight the innovative parts of the embodiments of the present application, units that are not closely related to solving the technical problems raised by the embodiments of the present application are not introduced in this embodiment, but this does not mean that there are no other units in this embodiment.

An embodiment of the present application relates to an electronic device. As shown in FIG. 5, the electronic device includes at least one processor 301 and a memory 302 communicated with the at least one processor 301.

An instruction that can be executed by the at least one processor 301 is stored in the memory 302. The instruction is executed by the at least one processor 301 to enable the at least one processor 301 to perform the above-mentioned data transmission method.

The memory and the processor are connected using a bus. The bus can include any number of interconnected buses and bridges. The bus connects one or more processors and various circuits of the memory together. The bus may also connect various other circuits such as peripheral circuits, voltage regulators, and power management circuits together, which are all well known in the art and therefore will not be described further herein. The bus interface provides the interface between the bus and the transceiver. A transceiver may be one element or multiple elements, such as multiple receivers and transmitters, providing a unit for communicating with various other devices over a transmission medium. The data processed by the processor is transmitted over the wireless medium through the antenna. Further, the antenna also receives the data and transmits the data to the processor.

The processor is responsible for managing the bus and general processing, and can also provide a variety of functions, including timing, peripheral interfaces, voltage regulation, power management, and other control functions. The memory can be used to store data used by the processor when performing operations.

An embodiment of the present application relates to a computer-readable storage medium on which a computer program is stored. The above method embodiments are implemented when the computer program is executed by the processor.

Those skilled in the art can understand that all or part of the steps in the methods of the above embodiments can be completed by instructing relevant hardware through a program. The program is stored in a storage medium and includes several instructions to cause a device (which can be a microcontroller, a chip, etc.) or a processor to perform all or part of the steps of the methods described in various embodiments of the present application. The aforementioned storage media include: U disk, mobile hard disk, read-only memory (ROM), random access memory (RAM), magnetic disk or optical disk and other media that can store program code.

Those skilled in the art can understand that the above-mentioned embodiments are specific examples for implementing the present application, and in actual applications, various changes can be made in form and details without departing from the scope of the embodiments of the present application.

## Claims

1. A data transmission method, applied to a primary router of a tri-band router, the primary router comprising a first channel, a second channel and a third channel, the method **characterized by** comprising:
in response to detecting that both a user equipment and a secondary router access the third channel, allocating a time slice with a number not less than a first threshold to the user equipment, and allocating a time slice with a number not less than a second threshold to the secondary router; and
performing data transmission with the user equipment and the secondary router through the third channel according to the time slices respectively allocated to the user equipment and the secondary router.

2. The data transmission method according to claim 1, further comprising:
in response to detecting that the user equipment accesses the third channel and the secondary router does not access the third channel, allocating a time slice with a number not less than a third threshold to the user equipment;
wherein the third threshold is greater than the first threshold.

3. The data transmission method according to claim 1, further comprising:
in response to detecting that the user equipment does not access the third channel and the secondary router accesses the third channel, allocating a time slice with a number not less than a fourth threshold to the secondary router;
wherein the fourth threshold is greater than the second threshold.

4. The data transmission method according to claim 1, wherein after allocating the time slice with the number not less than the first threshold to the user equipment and allocating the time slice with the number not less than the second threshold to the secondary router, the method further comprises:
in response to that the user equipment or the secondary router disconnects the data transmission with the primary router, adjusting allocation of the time slice.

5. The data transmission method according to claim 1, further comprising:
the third channel has a first port for the user equipment to access; and
the third channel has a second port for the secondary router to access.

6. The data transmission method according to claim 1, wherein the first threshold is equal to the second threshold;
allocating the time slice with the number not less than the first threshold to the user equipment and allocating the time slice with the number not less than the second threshold to the secondary router comprises:
allocating an equal number of time slices to the user equipment and the secondary router.

7. The data transmission method according to any one of claims 1 to 6, further comprising:
in response to detecting that neither the user equipment nor the secondary router accesses the third channel, pre-allocating the same number of time slices to the user equipment and the secondary router.

8. A data transmission apparatus, **characterized by** comprising:
an allocation unit, configured to allocate, in response to detecting that both a user equipment and a secondary router access a third channel, a time slice with a number not less than a first threshold to the user equipment and a time slice with a number not less than a second threshold to the secondary router; and
an execution unit, configured to perform data transmission with the user equipment and the secondary router through the third channel according to the time slices respectively allocated to the user equipment and the secondary router.

9. An electronic device, **characterized by** comprising:
at least one processor; and
a memory communicated with the at least one processor;
wherein an instruction executable by the at least one processor is stored in the memory and is executed by the at least one processor to enable the at least one processor to perform the data transmission method according to any one of claims 1 to 7.

10. A computer-readable storage medium, **characterized in that** a computer program is stored in the computer-readable storage medium, when the computer program is executed by a processor, the data transmission method according to any one of claims 1 to 7 is implemented.
